# EUROPÄISCHE PATENTSCHRIFT

(11) **EP 3 801 150 B1**
(45) Veröffentlichungstag und Bekanntmachung des Hinweises auf die Patenterteilung: **21.08.2024**
(21) Anmeldenummer: 19703344.2
(22) Anmeldetag: 11.02.2019
(51) Int. Cl.: A47J 31/42, A47J 31/40, A47J 42/50, A47J 31/50

(54) **EINHEIT FÜR EINE KAFFEEVORRICHTUNG**
UNIT FOR A COFFEE APPARATUS
UNITÉ POUR UN DISPOSITIF À CAFÉ

(30) Priorität: 31.05.2018 EP 18175384; 05.10.2018 EP 18198887; 05.10.2018 EP 18198888
(43) Veröffentlichungstag der Anmeldung: 14.04.2021
(73) Patentinhaber: Creatrix AG, 9100 Herisau (CH)
(72) Erfinder: DEUBER, Louis, 8805 Richterswil (CH)
(74) Vertreter: Clerc, Natalia
(86) Internationale Anmeldenummer: PCT/EP2019/053323
(87) Internationale Veröffentlichungsnummer: WO 2019/228681

(56) Entgegenhaltungen:
- WO-A1-2010/095937
- WO-A2-2010/033023
- WO-A2-2010/064902
- WO-A2-2010/064912
- DE-U1- 202007 015 307
- DE-U1- 202009 013 642

## Beschreibung

### TECHNISCHES GEBIET

Die vorliegende Erfindung betrifft eine Einheit für eine Kaffeevorrichtung. Die Einheit umfasst ein Behältermodul und einen Deckel, wobei das Behältermodul mindestens einen Kaffeebohnenbehälter und einen Portionierer umfasst.

### STAND DER TECHNIK

WO 2010/033023 A2, WO 2010/064902 A2, WO 2010/064912 A2 und WO 2010/095937 A1 offenbaren Kaffeevorrichtungen mit Dosiervorrichtungen für Kaffeebohnen.

Kaffee ist ein Genussmittel, welches einer fachgerechten Zubereitung bedarf. Damit Kaffee sein Aroma optimal entfalten kann, sollten die Kaffeebohnen zum Beispiel immer erst unmittelbar vor der Zubereitung des Kaffees gemahlen werden. Da nicht jeder dieselben Sorten Kaffeebohnen bevorzugt, ist es auch wünschenswert, dass möglichst schnell und einfach zwischen verschiedenen Kaffeesorten gewechselt werden kann.

Je nach Art des Kaffees, d.h. Espresso oder Lungo, ist eine unterschiedliche Menge Kaffeebohnen notwendig. Einige Kaffeemaschinen weisen deshalb Portionierer auf, welche eine vordefinierte Menge Kaffeebohnen dem Mahlwerk zuführen oder das frisch gemahlene Kaffeemehl wägen.

Des Weiteren ist der richtige Mahlgrad zur optimalen Entfaltung aller Aromastoffe sehr wichtig. In der Regel werden bei Kaffeevollautomaten Kaffeepulver aus Espressobohnen und z.B. aus Milchkaffeebohnen oder auch aus Lungos mit der gleichen Mahlfeinheit hergestellt. Es ist aber äusserst wichtig, dass die entsprechenden Bohnen, dunkel oder hell geröstet, auch mit dem korrekten Mahlgrad gemahlen werden.

In WO 2019/122397 A1 ist eine Einheit einer Kaffeevorrichtung beschrieben. Sie weist einen Kaffeebohnenbehälter zur Lagerung der Kaffeebohnen, einen Portionierer zur Dosierung der Kaffeebohnen für ein Kaffeegetränk und ein Mahlwerk zum Mahlen der dosierten Kaffeebohnen auf. Der Kaffeebohnenbehälter und der Portionierer sind in einem gemeinsamen Behältermodul ausgebildet. Die Einheit weist eine Modulaufnahme auf, mit welchem das Behältermodul bei Gebrauch verbindbar und nach Gebrauch entfernbar ist. Das Behältermodul weist durch den Benützer wählbare Einstellungen einer Dosiermenge und eines Mahlgrades auf, wobei die Einstellung der Dosiermenge auf den Portionierer und die Einstellung des Mahlgrades auf das Mahlwerk wirkt. Die dort beschriebene Kaffeevorrichtung ist beispielsweise eine Kaffeemaschine mit einer Brühvorrichtung oder eine Kaffeemühle, insbesondere zur Zubereitung von Einzelportionen. Je nach Ausführungsform eignet sie sich auch zur Zubereitung von Doppelportionen. Andere Ausführungsformen ermöglichen alternativ oder zusätzlich die Zubereitung von Mehrfachportionen.

Da die Einstellungen zum Mahlgrad und zur Dosierung direkt auf dem Behältermodul eingestellt werden, sind sie fest mit der im Bohnenbehälter abgefüllten Kaffeebohnensorte verbunden. Da diese Einstellungen bei Verbindung des Behältermoduls mit der restlichen Kaffeemaschine ohne weitere Aktion des Benützers berücksichtigt und ausgeführt werden, müssen diese Einstellungen nicht bei jeder erneuten Verwendung dieser Kaffeesorte wieder an der Maschine eingestellt werden. Die Handhabung ist somit einfach und garantiert gleichbleibende Kaffeequalität.

Diese Einheit bietet somit jederzeit einen frisch gemahlenen Kaffee ohne Beeinträchtigung des Aromas. Es ist ein einfaches Wechseln der Bohnensorte möglich, da lediglich das Behältermodul ausgewechselt werden muss. Die Einstellungen an der Kaffeemaschine lassen sich bohnen- und benützerabhängig einfach ändern, wobei einmal zu einer Kaffeesorte eingestellte Parameter bei späterer Benützung der Maschine nicht mehr eingestellt werden müssen, selbst wenn dazwischen eine andere Kaffeesorte gebrüht wurde. Da das Behältermodul keine elektronischen Bauteile aufweisen muss, lässt es sich relativ kostengünstig herstellen. In anderen Ausführungsformen, insbesondere für den Gastronomie-Bereich oder für Maschinen in einem höheren Preissegment, weist das Behältermodul auch elektronische Bauteile auf.

Die in WO 2019/122397 A1 beschriebenen Behältermodule weisen somit ein grosses Potential auf. Sie berücksichtigen jedoch noch zu wenig, wie die Behältermodule befüllt und aufbewahrt werden.

### DARSTELLUNG DER ERFINDUNG

Es ist deshalb eine Aufgabe der Erfindung, das Behältermodul zu optimieren.

Diese Aufgabe löst eine Einheit mit den Merkmalen des Patentanspruchs 1.

Die erfindungsgemässe Einheit weist mindestens ein Behältermodul auf. Das Behältermodul umfasst mindestens einen Kaffeebohnenbehälter und einen Portionierer zur Dosierung von Kaffeebohnen, wobei das Behältermodul als Ganzes zur Verbindung mit einer Kaffeevorrichtung ausgebildet ist. Diese Verbindung ermöglicht eine dosierte Abgabe von Kaffeebohnen aus dem Behältermodul in ein Mahlwerk der Kaffeevorrichtung. Der mit Kaffeebohnen gefüllte Kaffeebohnenbehälter ist vor einem Erstgebrauch dicht verschlossen und er weist nach einem erstmaligen Öffnen eine Öffnung auf, durch welche Kaffeebohnen in den Portionierer gelangen. Der Kaffeebohnenbehälter ist dabei bei bestimmungsgemässem Gebrauch des Behältermoduls mit einer Kaffeevorrichtung über dem Portionierer angeordnet. Der Kaffeebohnenbehälter ist lösbar und wiederverbindbar mit dem Portionierer gekoppelt. Um die Öffnung ist ein Kopplungselement angeordnet, welches zur Verbindung mit dem Portionierer dient, wobei die Öffnung bei vom Portionierer getrenntem Kaffeebohnenbehälter wieder verschliessbar ist.

Dank dieser lösbaren Verbindung von Kaffeebohnenbehälter und Portionierer können die Kaffeebohnen bereits in einem vorkonfektionierten Behälter angeboten werden. Der Konsument muss vor Gebrauch lediglich noch die Verbindung zum Portionierer erstellen. Zudem muss bei Nichtgebrauch nicht das gesamte Behältermodul im Kühlschrank oder an einem anderen geeigneten Ort aufbewahrt werden. Der Kaffeebohnenbehälter lässt sich wieder vom Portionierer entfernen und bis zum nächsten Gebrauch mit seinem Deckel dicht verschliessen. Des Weiteren lässt sich der Portionierer mehrfach verwenden, auch wenn der Kaffeebohnenbehälter als Einwegverpackung ausgebildet ist. Vorzugsweise ist der Kaffeebohnenbehälter jedoch ebenfalls als mehrmals verwendbar. Beispielsweise lässt sich der Behälter auch wieder bei einem Kaffeelieferanten, beispielsweise einem Röster, nachfüllen. Vorzugsweise ist der Kaffeebohnenbehälter aus einem steifen oder halbsteifen Material gefertigt. Vorzugsweise ist der Kaffeebohnenbehälter aus Metall, Glas oder PET gefertigt. In anderen Ausführungsformen weist der Kaffeebohnenbehälter einen weichen bzw. flexiblen Grundkörper auf. Beispielsweise ist er eine Kaffeetüte oder ein Beutel. Der Grundkörper ist mit dem Kopplungselement fest oder lösbar verbunden. Beispielsweise ist dieses Kopplungselement ein Gewindering, welcher an der Kaffeetüte oder am Beutel befestigt werden kann oder bereits verkaufsseitig schon an der Kaffeetüte oder am Beutel befestigt ist.

Diese einfache lösbare Verbindung ist möglich, da der Kaffeebohnenbehälter nicht direkt auf die Kaffeemaschine oder auf die Kaffeemühle aufgesteckt werden muss. In diesem Falle wäre nämlich beim Aufstecken die Öffnung ungeschützt nach unten gerichtet und die Kaffeebohnen würden herausfallen. In der erfindungsgemässen Vorrichtung lässt sich der Kaffeebohnenbehälter mit nach oben gerichteter Öffnung mit dem umgestürzten Portionierer verbinden und das zusammengesetzte Behältermodul muss erst dann für die Montage auf der Kaffeevorrichtung umgedreht werden. Die Öffnung ist nun durch den Portionierer geschützt und die Kaffeebohnen im Modul gehalten.

In einer einfachen Ausführungsform ist der mit Kaffeebohnen gefüllte Behälter mit einer Folie zugedeckt, zugeklebt, verschweisst oder anderweitig verschlossen. Er lässt sich nach einer Trennung vom Portionierer ebenfalls wieder verschliessen. Dies lässt sich beispielsweise wiederum durch Verkleben, Verschweissen, Umfalten von Behälterrändern oder auf andere Art und Weise durchführen.

In einer bevorzugten Ausführungsform weist die Einheit jedoch einen Deckel zum Verschliessen des Behälters auf. Dieser Deckel wird je nach Ausführungsform erst nach dem Erstgebrauch oder bereits vor dem Erstgebrauch zum Verschliessen verwendet.

In einer einfachen Ausführungsform ist der Deckel eine abziehbare luft- und aromadichte Folie. In einer anderen Ausführungsform ist der Deckel luftdicht auf den Kaffeebohnenbehälter wieder aufdrückbar. In anderen Ausführungsformen ist zur dichten Verbindung ein zweites Kopplungselement vorhanden. In bevorzugten Ausführungsformen dient das Kopplungselement, welches zur Verbindung mit dem Portionierer dient, auch der dichten Verbindung mit dem Deckel.

In einer bevorzugten Ausführungsform ist das Kopplungselement ein erstes Gewinde und der Portionierer weist ein dazu passendes zweites Gewinde auf, welches mit dem ersten Gewinde im Eingriff bringbar ist. Dies ist eine einfache, stabile und kostengünstige Art der Verbindung. Vorzugsweise weist der Deckel ein drittes Gewinde auf, welches mit dem ersten Gewinde in Eingriff bringbar ist. Auch dies minimiert die Herstellungskosten und ist zudem einfach zu handhaben.

Vorzugsweise ist der Kaffeebohnenbehälter bis auf die Öffnung geschlossen ausgebildet. Vorzugsweise ist somit der gegenüberliegende Boden geschlossen und nicht zerstörungsfreie entfernbar. In anderen Ausführungsformen weist er ebenfalls einen entfernbaren Deckel auf. In einer bevorzugten Ausführungsform ist der Behälter im Wesentlichen kreiszylinderförmig ausgebildet. Vorzugsweise weist er einen Innendurchmesser auf. Diese Ausbildungen erlauben die Herstellung eines einfachen und kostengünstigen Behälters. Vorzugsweise ist er gemeinsam mit dem Deckel stapelbar ausgebildet. In einer bevorzugten Ausführungsform weist er die Form eines schlichten Marmeladeglases auf, wobei auch seine Dimensionen ungefähr einem derartigen Glas entsprechen. Sein Fassungsvermögen beträgt vorzugsweise 100 g bis 250 g und noch bevorzugter circa 160 g.

Der Portionierer weist vorzugsweise im Wesentlichen eine kreiszylinderförmige Aussenkontur auf. Vorzugsweise fluchten die Aussenkonturen des Portionierers und des Kaffeebohnenbehälters oder der Kaffeebohnenbehälter weist einen leicht kleineren Aussendurchmesser auf.

Der Portionierer kann auf unterschiedliche Art und Weise ausgebildet sein. Je nach Ausführungsform entspricht er einem der aus dem Stand der Technik bekannten Portionierer. Vorzugsweise entspricht er jedoch einem Portionierer, wie er in den eingangs erwähnten, noch nicht veröffentlichten Europäischen Patentanmeldungen beschrieben und gezeigt ist. Er weist deshalb vorzugsweise ein erstes Einstellmittel auf, vorzugsweise einen ersten Einstellring, mittels welchem eine Dosierung der Kaffeebohnen manuell wählbar ist. Im Innern verfügt er hierfür vorzugsweise über eine Dosierkammer, welche mittels des ersten Einstellmittels in ihrem Fassungsvolumen veränderbar ist.

Das Behältermodul besteht in einer einfachen Ausführungsform aus dem Kaffeebohnenbehälter und dem Portionierer. In bevorzugten Ausführungsformen weist das Behältermodul jedoch ferner eine Mahlgradeinstellung zur wählbaren Einstellung eines Mahlgrads auf. Die Mahlgradeinstellung wirkt bei Verbindung des Behältermoduls mit dem Mahlwerk auf das Mahlwerk. Vorzugsweise ist der Portionierer zwischen Kaffeebohnenbehälter und Mahlgradeinstellung angeordnet. Vorzugsweise weist die Mahlgradeinstellung ein zweites Einstellmittel auf, vorzugsweise einen zweiten Einstellring, mittels welchem der Mahlgrad manuell wählbar ist. Die Mahlgradeinstellung kann jedoch auch mit anderen Mitteln erfolgen. Beispielsweise kann das Behältermodul mit einem RFID Tag mit Daten zur Mahlgradeinstellung versehen sein und die Kaffeevorrichtung verfügt über einen entsprechenden Leser. Es lassen sich unterschiedliche Arten von Mahlgradeinstellungen verwenden. Vorzugsweise sind Mahlgradeinstellungen verwendet, wie sie in den eingangs erwähnten noch unveröffentlichten EP Anmeldungen beschrieben sind. In den dort beschriebenen Varianten ist zudem die manuelle Einstellung mittels des Einstellmittels, insbesondere des Einstellrings, bevorzugt.

Vorzugsweise ist das Mahlwerk so gestaltet und/oder es wird vorzugsweise so betrieben, dass es nach jedem Mahlen vollständig entleert wird und kein gemahlenes Kaffeepulver im Mahlwerk verbleibt. Lösungen hierzu sind hinlänglich bekannt und werden hier deshalb nicht im Detail beschrieben.

Vorzugsweise weist das gesamte Behältermodul eine im Wesentlichen zylinderförmige Aussenkontur auf. Im Falle, dass eine Mahlgradeinstellung vorhanden ist, weist vorzugsweise auch dieser Abschnitt diese Aussenkontur auf. Dies ergibt ein schlichtes, platzsparendes Design, welches die Flexibilität bei der Entwicklung neuer Kaffeevorrichtungen erhöht und welches ein einfaches Lagern der Behältermodule bei Nichtgebrauch ermöglicht.

Der Kaffeebohnenbehälter einer derartigen erfindungsgemässen Einheit ist vorzugsweise kreiszylinderförmig und einstückig ausgebildet mit einem geschlossenen Boden und mit der dem Boden gegenüberliegenden Öffnung. Die Öffnung ist von einem Aussengewinde umgeben und der Deckel ein dazu passendes Innengewinde auf.

In einer anderen bevorzugten Ausführungsform ist der Kaffeebohnenbehälter ein Beutel mit einem Rand, der eine Öffnung des Kaffeebohnenbehälters umgibt, wobei das Kopplungselement einen unteren Ring zur Verbindung mit dem Portionierer und einen oberen Ring aufweist und wobei der Rand des Kaffeebohnenbehälters im geöffneten Zustand des Kaffeebohnenbehälters zwischen dem oberen und dem unteren Ring eingeklemmt gehalten ist.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines erfindungsgemässen Kaffeebohnenbehälters mit Deckel;
- Figur 2: einen Längsschnitt durch den Kaffeebohnenbehälter mit Deckel gemäss Figur 1;
- Figur 3: eine perspektivische Darstellung des Kaffeebohnenbehälters gemäss Figur 1 ohne Deckel;
- Figur 4: eine perspektivische Darstellung des Kaffeebohnenbehälters gemäss Figur 1 bei der Montage mit Portionierer und Mahlgradeinstellung zu einem Behältermodul;
- Figur 5: eine Seitenansicht des erfindungsgemässen Behältermoduls gemäss Figur 4 in Gebrauchslage;
- Figur 6: einen Längsschnitt durch das Behältermodul gemäss Figur 5;
- Figur 7: einen Längsschnitt durch eine Variante des Behältermoduls gemäss Figur 6 in Verwendung mit einer Kaffeemühle;
- Figur 8: eine perspektivische Darstellung einer Kaffeemühle mit zwei erfindungsgemässen Behältermodulen gemäss Figur 5;
- Figur 9: eine perspektivische Explosionsdarstellung eines erfindungsgemässen Kaffeebohnenbehälters in einer weiteren Ausführungsform;
- Figur 10: einen Längsschnitt durch den Kaffeebohnenbehälter gemäss Figur 9 und
- Figur 11: einen vergrösserten Ausschnitt des Kaffeebohnenbehälters gemäss Figur 10.

### BESCHREIBUNG BEVORZUGTER AUSFÜHRUNGSFORMEN

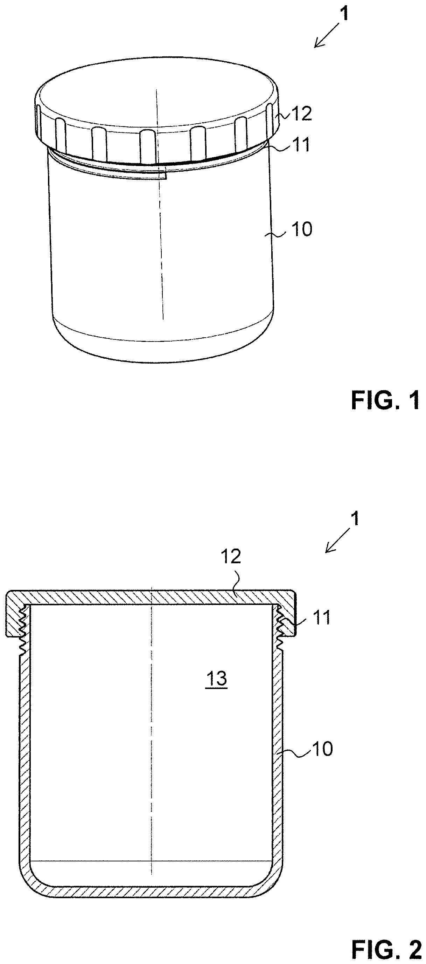

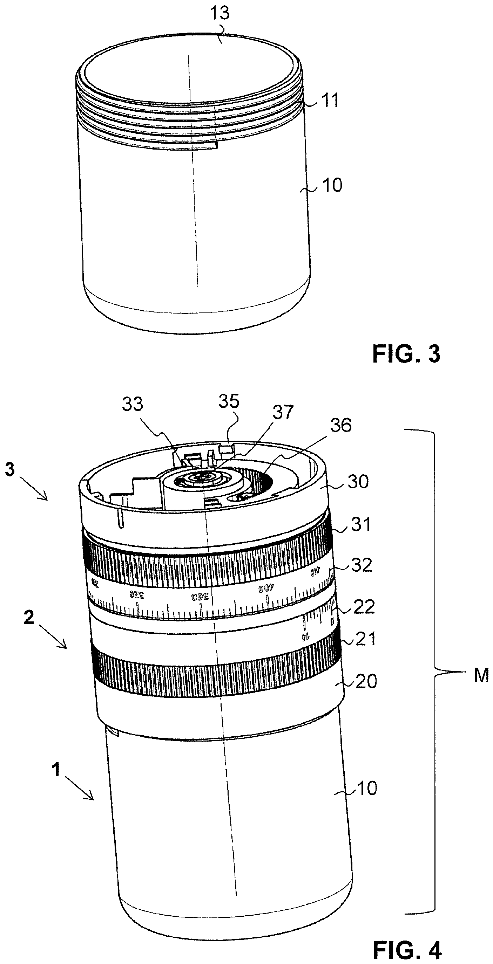

In den Figuren 1 und 2 ist eine erfindungsgemässe Dose 1 mit einem Kaffeebohnenbehälter 10 und einem Deckel 12 dargestellt. Der Kaffeebohnenbehälter 10 ist aus einem festen oder halbfesten Material, beispielsweise Glas, Metall oder einem Kunststoff, z.B. PET, gefertigt. Der Deckel 12 ist vorzugsweise aus PET, einem andere Kunststoff oder aus Metall gefertigt. Der Deckel 12 ist rund und flach. Der Behälter 10 ist kreiszylinderförmig mit einem flachen Boden. Er definiert einen Innenraum 13 mit gleichbleibendem Innendurchmesser bis hin und inklusive seiner Auslassöffnung. Der Behälter 10 ist vorzugsweise einstückig ausgebildet. Er weist an seinem oberen freien Ende ein Kopplungselement 11, hier in Form eines Aussengewindes auf, welches mit einem Innengewinde des Deckels 12 in Eingriff bringbar ist. Das Aussengewinde 11 ist in Figur 3 gut erkennbar.

Im Kaffeebohnenbehälter 10 lassen sich Kaffeebohnen aufbewahren. Der Behälter 10 lässt sich auf übliche Weise auf seiner Aussenseite entsprechend anschreiben, um Auskunft über seinen Inhalt zu geben.

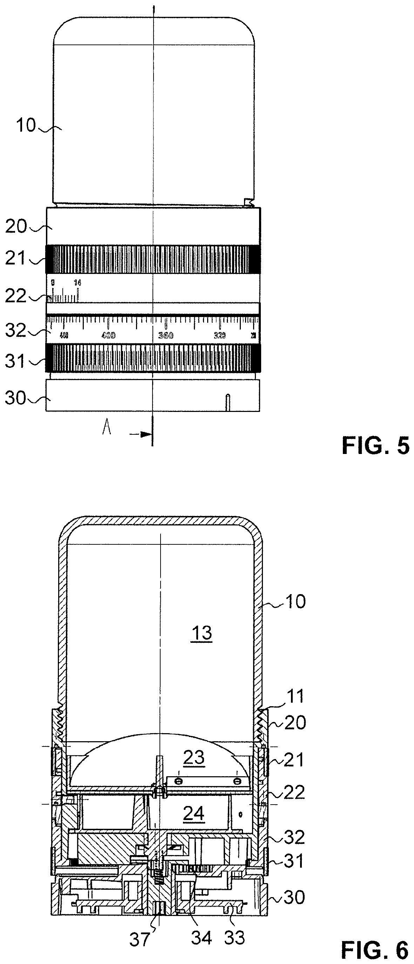

Der Kaffeebohnenbehälter 10 lässt sich anstelle der Verbindung mit dem Deckel 12 mit einem Modulteil zu einem Behältermodul M zusammensetzen. Hierzu wird er mit seiner Öffnung nach oben ausgerichtet und das Modulteil, hier bestehend aus einem Portionierer 2 und einer Mahlgradeinstellung 3 wird auf den Behälter 10 aufgebracht. Wie in Figur 6 erkennbar ist, weist das Modulteil, hier ein Grundkörper 20 des Portionierers 2, ein entsprechendes Innengewinde auf, so dass das Modulteil 2, 3 anstelle des Deckels 12 auf den Behälter 10 aufgeschraubt werden kann.

Das Behältermodul M, insbesondere der Portionierer 2 und die Mahlgradeinstellung 3, lassen sich in den Figuren 4 bis 6 gut erkennen. Der Portionierer 2 dient dazu, die Kaffeebohnen, welche nun gemäss den Figuren 5 und 6 in der Gebrauchslage von oben aus dem Behälter 10 in den Portionierer 2 fallen, zu dosieren. Hierzu ist fallen die Bohnen auf eine Schrägfläche 23 des Portionierers 2 und weiter in eine Dosierkammer 24. Die Grösse dieser Dosierkammer 24 lässt sich mittels eines ersten Einstellrings 21 verändern. Der erste Einstellring 21 umgibt vorzugsweise den Grundkörper 20. Konkret werden in diesem Ausführungsbeispiel durch Drehen des ersten Einstellrings 21 zwei Drehscheiben so relativ zueinander in Längsrichtung des Moduls verschoben, dass sich das Volumen der Dosierkammer 24 verändert. Der Grundkörper 20 verändert dabei seine Position nicht, insbesondere wird er nicht mitgedreht. Eine Markierung 22 auf dem Grundkörper 20 gibt an, wie weit der erste Einstellring 21 gedreht wurde.

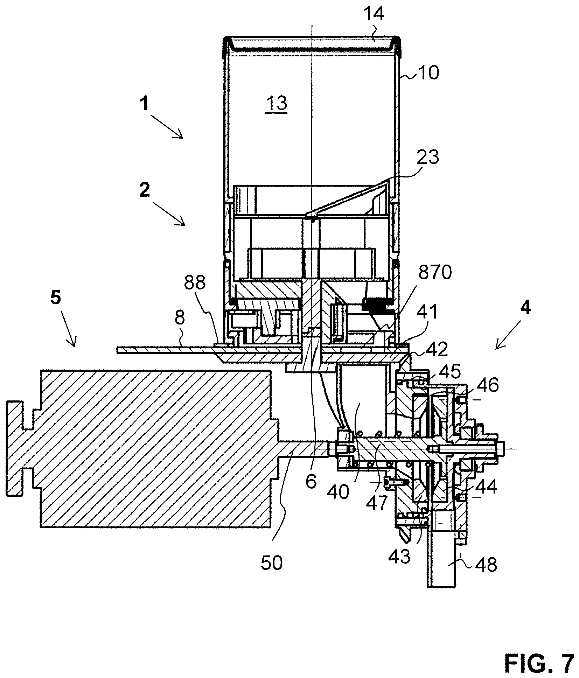

Die in Gebrauchslage unter dem Portionierer 2 angeordnete Mahlgradeinstellung 3 dient dazu, bei Kopplung mit einer Kaffeevorrichtung das dortige Mahlwerk entsprechend einzustellen. In den meisten Ausführungsformen bedeutet dies, dass der Abstand zwischen den Mahlscheiben 43, 44 des Mahlwerks 4 nach Massgabe der Mahlgradeinstellung verändert und eingestellt wird (siehe Figur 7). Die Mahlgradeinstellung 3 weist ebenfalls einen Grundkörper 30 auf, welcher vorzugsweise fest mit dem Grundkörper 20 des Portionierers verbunden oder sogar einstückig mit ihm ausgebildet ist. Beide Grundkörper 20, 30 sind vorzugsweise kreiszylinderförmig ausgebildet und weisen vorzugsweise denselben Aussendurchmesser auf. Die Mahlgradeinstellung 3 weist vorzugsweise einen zweiten Einstellring 31 auf, welcher den Grundkörper 30 umgibt. Eine Markierung 32 auf dem Grundkörper 30 dient dazu, die gewählte Drehposition des Einstellrings 31 relativ zum Grundkörper 30 zu erkennen.

Im Innern des Grundkörpers 30 der Mahlgradeinstellung 3 ist ein Mechanismus angeordnet, welcher eine Voreinstellung des Mahlgrades erlaubt und welcher bei Kopplung mit einer Kaffeevorrichtung diese Voreinstellung vorzugsweise mechanisch an das Mahlwerk 4 übermittelt. Der Mechanismus besteht vorzugsweise aus mehreren Zahnrädern und Verzahnungen, welche mittels des zweiten Einstellrings 31 in ihrer relativen Position zueinander eingestellt werden. Der Mechanismus wird hier nicht im Detail beschrieben. Verschiedene Ausführungsformen dazu sind in den zwei eingangs erwähnten und noch unveröffentlichten Europäischen Patentanmeldungen ausführlich erläutert. Ein erstes Zahnrad des Mechanismus ist in Figur 6 mit dem Bezugszeichen 34 versehen, eine Innenzahnkranz mit dem Bezugszeichen 36. Ein Drehring, welcher der Übermittlung der Einstellung an das Mahlwerk dient, trägt das Bezugszeichen 33. Eine Antriebsachsenaufnahme 37 ist nach unten offen ausgebildet und dient der Verbindung mit einer Antriebsachse 6, welche in Figur 7 gut erkennbar ist. Die Antriebsachsenaufnahme 37 ist mit dem Portionierer 2 verbunden, damit bei Gebrauch die Dosierkammer 24 in das Mahlwerk 4 entleert wird.

Wie in Figur 4 gut erkennbar ist, weist das Behältermodul M, hier die Mahlgradeinstellung 3, ein Mittel zur Verbindung mit einer Kaffeevorrichtung auf. Dies kann ebenfalls ein Gewinde, ein Schnappverschluss oder ein anderes geeignetes Mittel sein. In diesem Fall folge die Verbindung über einen Bajonettverschluss 35.

In Figur 7 ist diese Verbindung erkennbar. Das Behältermodul M ist auf einem Maschinengehäuse 8 der Kaffeevorrichtung befestigt. Der Kaffeebohnenbehälter 10 entspricht nicht der vorangehend beschriebenen Ausführungsform. Er weist eine feste Verbindung mit dem Portionierer 2 auf und er verfügt am gegenüberliegenden Ende über einen oberen Deckel 14. Erfindungsgemäss ist nicht dieser Behälter 10 verwendet, sondern der Behälter 10 wie oben beschrieben und die Verbindung zum Portionierer 2 ist entsprechend angepasst, d.h. zerstörungsfrei lösbar und wieder verbindbar ausgebildet.

Das Gehäuse 8 weist eine Durchgangsöffnung 870 auf, welcher unterhalb eines Auslasses des Behältermoduls M, genauer der Dosierkammer 24, angeordnet ist und somit eine Verbindung von der Dosierkammer 24 zum Mahlwerk 4 schafft. Im Gehäuse 8 ist das Mahlwerk 4 mit einer ersten und einer zweiten Mahlscheibe 43, 44 angeordnet. Die Mahlscheiben 43, 44 sind vorzugsweise in vertikaler Richtung in einem Abstand zueinander angeordnet. Der Abstand definiert den Mahlgrad und somit die Feinheit des aus den Kaffeebohnen gewonnenen Kaffeemehls. Eine Einstellscheibe 41 des Mahlwerks 4 steht in Wirkverbindung mit der Mahlgradeinstellung 3, vorzugsweise mit dem Drehring 33. Wird das Behältermodul M auf das Gehäuse 8 montiert, so dreht die Mahlgradeinstellung 3 den Einstellring 41. Ein Kegelrad des Einstellrings 41 greift in eine Kegelverzahnung einer Überwurfmutter 42 ein und dreht diese. Dadurch wird die in der Überwurfmutter gehaltene erste Mahlscheibe 43 relativ zur zweiten Mahlscheibe 44 verschoben. Ihr Abstand verändert sich und der gewünschte Mahlgrad ist eingestellt. Der sich ändernde Abstand zwischen Flanschen der zwei Mahlscheiben 43, 44 ist mit dem Bezugszeichen 45 versehen, der sich ändernde Abstand zwischen den zwei Mahlscheiben 43, 44 selber ist mit dem Bezugszeichen 46 bezeichnet. Die zwei Abstände stehen in Relation zueinander.

Die zweite Mahlscheibe 44 ist mittels eines Mahlwerkmotors 5 angetrieben. Der Mahlwerkmotor 5 ist üblicherweise ein Elektromotor. Er weist eine Motorachse 50 auf, welche einen Förderrotor 47 mit aussenseitiger Förderspirale dreht. Der Förderrotor 47 treibt die zweite Mahlscheibe 44 an.

Die Kaffeevorrichtung weist einen zweiten, hier nicht dargestellten Elektromotor auf, welcher vor oder bei Betätigung des Mahlwerks 4 die Antriebsachse 6 antreibt. Dadurch wird die Dosierkammer 24 gedreht und sie öffnet einen Auslass über einem Einwurfkanal 40 des Mahlwerks 4. Die dosierte Menge Kaffeebohnen rutscht schwerkraftbedingt in den Einwurfkanal 40 und wird von dort mittels des Förderrotors 47 zwischen die zwei Mahlscheiben 43, 44 gefördert. Das dadurch entstehende Kaffeemehl gelangt durch den Auslasskanal 48 in den nächsten Bereich der Kaffeevorrichtung. Ist die Vorrichtung eine Kaffeebrühmaschine, gelangt das Kaffeemehl in den Brühbereich. Ist die Vorrichtung eine Kaffeemühle, so gelangt das Kaffeemehl in einen Auslass 81 der Vorrichtung.

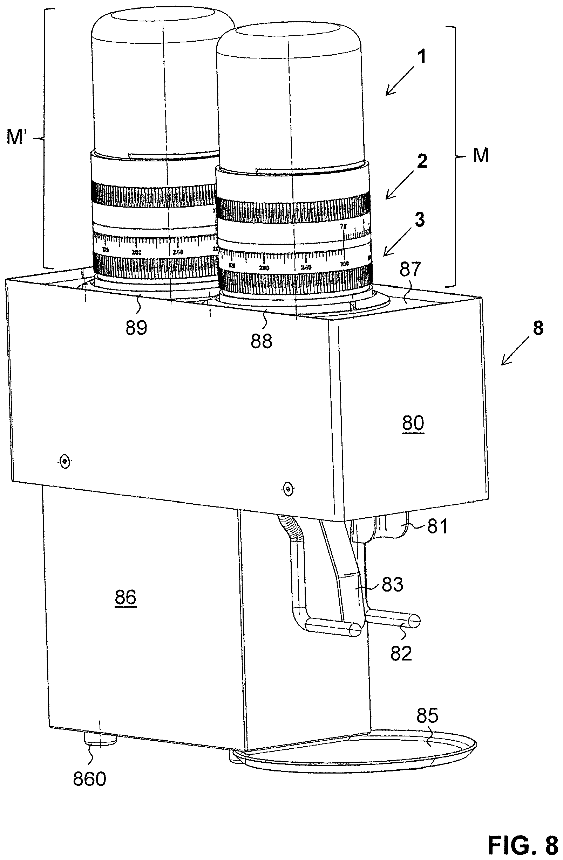

In Figur 8 ist ein bevorzugtes Beispiel einer Kaffeemühle in Kombination mit zwei erfindungsgemässen Behältermodulen M, M` dargestellt. Die Kaffeemühle weist das bereits erwähnte Gehäuse 8 auf. Das Gehäuse 8 verfügt über einen Grundkörper 80, in welchem das Mahlwerk 4, der Elektromotor 5, allfällige Steuerungen und allfällige weitere Elemente der Kaffeemühle angeordnet sind. Sein Inneres ist vorzugsweise entsprechend der Figur 7 ausgebildet.

Der Grundkörper 80 weist vorzugsweise einen Sockel 86 mit Füssen 860 auf. Andere Ausbildungsarten des Gehäuses 8 sind ebenfalls möglich. Der Grundköper 80 steht dem Sockel 86 auf einer Seite vor. Er weist in diesem Bereich den nach unten gerichteten Auslass 81 auf, durch welchen das Kaffeemehl entnommen wird. Eine Siebträger-Aufnahme 82 ist unterhalb des Auslasses 81 angeordnet, um einen Siebträger einer Kaffeebrühmaschine aufzunehmen. Unterhalb der Siebträger-Aufnahme 82 ist vorzugsweise eine Auffangschale 85 vorhanden, um allfälliges gestreutes Kaffeemehl aufzusammeln.

Vorzugsweise ist ein Betätigungshebel 83 im Bereich der Siebträger-Aufnahme 82 vorhanden, welcher durch die Auflage eines Siebträgers betätigt wird und über die Steuerung das Mahlwerk 4 betätigt, d.h. die Kaffeemühle aktiviert.

Auf einer Oberseite 87 des Grundkörpers 80 sind zwei Aufnahmen 88, 89 für zwei Behältermodule M, M' angeordnet. Sie sind entsprechend den Kopplungsmitteln des Behältermoduls M, M` geformt. Vorzugsweise sind sie identisch ausgebildet, so dass beide Behältermodule M, M' wahlweise mit einer der zwei Aufnahmen 88, 89 verbindbar sind. In diesem Beispiel sind es Bajonettverschlüsse. Die erste Aufnahme 88 weist die erwähnte Durchgangsöffnung 870 zum Einwurfkanal 40 und somit zum Mahlwerk 4 auf. Die zweite Aufnahme 89 ist blind ausgebildet, d.h. sie dient lediglich zur Lagerung und Fixierung des zweiten Behältermoduls M' und sie weist keine Verbindung zum Innenraum und zum Mahlwerk der Kaffeemühle auf.

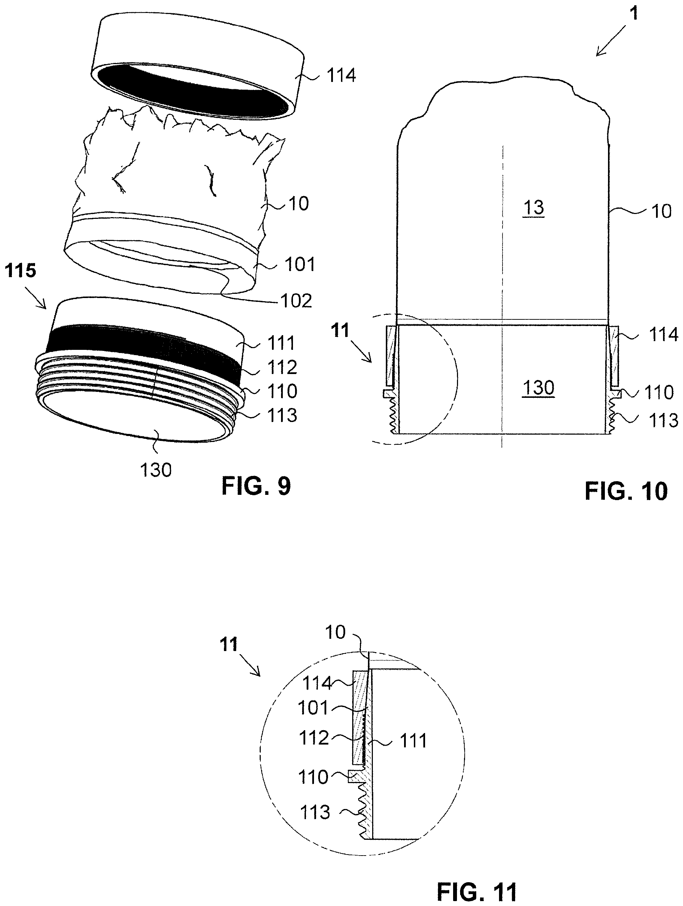

In den Figuren 9 bis 11 ist eine weitere Ausführungsform eines erfindungsgemässen Kaffeebohnenbehälters dargestellt. Der Kaffeebohnenbehälter 10 ist hier als flexibler oder weicher Beutel ausgebildet. Er weist einen Rand 101 auf, der eine Öffnung umgibt, die vor dem Erstgebrauch vorzugsweise luftdicht verschlossen ist.

In einer bevorzugten Ausführungsform ist ein Druckverschluss, auch Minigrip genannt, vorhanden, wie er im Stand der Technik für Lebensmittelbeutel, beispielsweise für Nüsse, bekannt ist. Hierzu weist der Beutel üblicherweise benachbart zur Öffnung eine Dichtrippe 102 mit passender gegenüberliegenden Nut auf, die ein luftdichtes Wiederverschliessen des Kaffeebohnenbehälters ermöglicht. Durch Aufeinanderpressen der zwei einander gegenüberliegenden Seiten des Beutels greift die Dichtrippe 102 in die Nut ein und der Beutel ist dadurch wieder dicht verschlossen. In anderen Ausführungsformen lässt sich der Beutel auf andere Art und Weise wieder verschliessen, wenn er vom Portionierer 2 entfernt wird, oder es sind keine speziellen Mittel für ein Wiederverschliessen vorgesehen.

Der Kaffeebohnenbehälter 10 lässt sich wie bereits oben ausführlich beschrieben, im Behältermodul verwenden, wobei das Behältermodul mit einer Kaffeevorrichtung, beispielsweise einer Kaffeemühle oder einer Kaffeemaschine lösbar verbindbar ist.

Zur Verbindung mit dem restlichen Behältermodul dient wiederum das Kopplungselement 11. Das Kopplungselement 11 ist in diesem Beispiel als separates Teil ausgebildet. Es weist einen unteren Ring 115 und einen oberen Ring 114 aus. Der untere Ring 115 weist an einem ersten Ende das Gewinde 113 zur Verbindung mit dem Gewinde des Portionierers 2 auf. Vorzugsweise ist das Gewinde 113 des unteren Rings 115 ein Aussengewinde. Der untere Ring 115 weist einen umlaufenden Flansch 110 auf, von welchem sich ein konischer Bereich 111 bis zum zweiten Ende des unteren Rings 115 erstreckt. Der konische Bereich 111 ist plan ausgebildet oder er weist über mindestens einen Teil seiner Höhe Rippen 112, Noppen oder kleine Verzahnungen auf, wie dies in diesem Beispiel der Fall ist.

Der untere Ring 115 weist eine Durchgangsöffnung 130 auf, welche mit der Öffnung des Kaffeebohnenbehälters 10 fluchtet und somit eine bei montiertem Behälter 10 stets offene Verbindung zwischen dem Innenraum 13 des Behälters 10 und dem Dosierer 2 schafft.

Der obere Ring 114 ist auf seiner Innenseite ebenfalls konisch ausgebildet und bildet das Gegenstück zum Konus des unteren Rings 115. Die Aussenseite verläuft vorzugsweise parallel zur Längsmittelachse, so dass der obere Ring 114 eine nach unten zum Flansch 110 des unteren Rings 115 hin abnehmende Dicke aufweist. Die innere Oberfläche des oberen Rings 115 ist je nach Ausführungsform plan ausgebildet oder sie weist ebenfalls Rippe, Noppen oder kleine Verzahnungen auf.

Der Kaffeebohnenbehälter 10 lässt sich bei Gebrauch, nachdem er geöffnet wurde, mit seinem Rand 101 über den konischen Bereich 111 und die Rippen 112 des unteren Rings 115 stülpen. Damit die Kaffeebohnen nicht aus dem Beutel fallen, ist dabei die Öffnung des Beutels nach oben gerichtet, also in umgekehrter Richtung als in den Figuren dargestellt. Anschliessend wird der obere Ring 114 über den Kaffeebohnenbehälter 10 und den konischen Bereich 111 des unteren Rings 115 geschoben, so dass der Rand 101 des Beutels zwischen den zwei Ringen 114, 115 eingeklemmt ist. Der Beutel und das Kopplungselement 11 lassen sich anschliessend gemeinsam mit dem Portionierer 2 verbinden, auch dies mit nach oben gerichteter Öffnung 130 des Kopplungselements 11, also wieder um anders als in den Figuren dargestellt.

In Figur 9 ist der Beutel realistisch dargestellt mit weicher Oberfläche. In Figur 10 ist er schematisch dargestellt mit geradliniger Oberfläche, wie dies in der Realität bei weichen Beuteln kaum je der Fall ist.

Um den Beutel wieder zu entfernen, lässt sich der obere Ring 114 wieder vom unteren Ring 115 wegschieben, so dass der Rand 101 des Beutels freigegeben wird und dieser einfach entfernt, für einen späteren Gebrauch wieder verschlossen oder, falls leer, entsorgt werden kann.

Diese Ausführungsform weist den Vorteil auf, dass die Kaffeebohnen in Geschäften in derartigen Beuteln angeboten werden können und diese mit Ablaufdatum und Inhaltsangaben beschriftet mit dem Portionierer im Behältermodul verwendet werden können.

Die erfindungsgemässe Einheit ermöglicht ein kostengünstiges und umweltbewusstes Kaffeehandling und einen ebensolchen Kaffeegenuss.

### BEZUGSZEICHENLISTE

| | | | |
|---|---|---|---|
| 1 | Dose | | |
| 10 | Kaffeebohnenbehälter | 4 | Mahlwerk |
| 101 | Rand | 40 | Einwurfkanal |
| 102 | Dichtrippe | 41 | Einstellscheibe |
| 11 | Kopplungselement | 42 | Überwurfmutter |
| 110 | Flansch | 43 | erste Mahlscheibe |
| 111 | konischer Bereich | 44 | zweite Mahlscheibe |
| 112 | Rippen | 45 | erster Abstand |
| 113 | Gewinde | 46 | zweiter Abstand |
| 114 | oberer Ring | 47 | Förderrotor |
| 115 | unterer Ring | 48 | Auslasskanal |
| 12 | Deckel | | |
| 13 | Innenraum | 5 | Mahlwerkmotor |
| 130 | Öffnung | 50 | Motorachse |
| 14 | oberer Deckel | | |
| | | 6 | Antriebsachse |
| 2 | Portionierer | | |
| 20 | Grundkörper | 8 | Maschinengehäuse |
| 21 | erster Einstellring | 80 | Grundkörper |
| 22 | Markierung | 81 | Auslass |
| 23 | Schrägfläche | 82 | Siebträger-Aufnahme |
| 24 | Dosierkammer | 83 | Betätigungsbügel |
| | | 85 | Auffangschale |
| 3 | Mahlgradeinstellung | 86 | Sockel |
| 30 | Grundkörper | 860 | Fuss |
| 31 | zweiter Einstellring | 87 | Oberseite |
| 32 | Markierung | 870 | Durchgangsöffnung |
| 33 | Drehring | 88 | erste Aufnahme |
| 34 | Zahnrad | 89 | zweite Aufnahme |
| 35 | Bajonettverschluss | | |
| 36 | Innenzahnkranz | M | erstes Behältermodul |
| 37 | Antriebsachsenaufnahme | M` | zweites Behältermodul |

## Patentansprüche

1. Einheit mit einem Behältermodul (M), wobei das Behältermodul (M) mindestens einen Kaffeebohnenbehälter (10) und einen Portionierer (2) zur Dosierung von Kaffeebohnen umfasst, wobei das Behältermodul (M) als Ganzes zur Verbindung mit einer Kaffeevorrichtung ausgebildet ist, wobei diese Verbindung eine dosierte Abgabe von Kaffeebohnen aus dem Behältermodul (M) in ein Mahlwerk (4) der Kaffeevorrichtung ermöglicht und wobei der Kaffeebohnenbehälter (10) vor dem Erstgebrauch dicht verschlossen ist und nach einem Öffnen eine Öffnung aufweist, durch welche Kaffeebohnen in den Portionierer (2) gelangen, und wobei der Kaffeebohnenbehälter (10) bei bestimmungsgemässem Gebrauch des Behältermoduls (M) mit einer Kaffeevorrichtung über dem Portionierer (2) angeordnet ist, **dadurch gekennzeichnet, dass** der Kaffeebohnenbehälter (10) lösbar und wiederverbindbar mit dem Portionierer (2) gekoppelt ist, dass um die Öffnung ein Kopplungselement (11) angeordnet ist, welches zur Verbindung mit dem Portionierer (2) dient, und dass die Öffnung bei vom Portionierer (2) getrenntem Kaffeebohnenbehälter (10) wieder verschliessbar ist.

2. Einheit nach Anspruch 1, wobei das Kopplungselement ein erstes Gewinde (11, 113) ist und wobei der Portionierer (2) ein dazu passendes zweites Gewinde aufweist, welches mit dem ersten Gewinde (11, 113) im Eingriff bringbar ist.

3. Einheit nach einem der Ansprüche 1 oder 2, wobei die Einheit einen Deckel (12) zum Verschliessen des Behälters aufweist.

4. Einheit nach Anspruch 3, wobei das Kopplungselement (11) zur Verbindung mit dem Deckel (12) dient.

5. Einheit nach den Ansprüchen 2 und 4, wobei der Deckel (12) ein drittes Gewinde aufweist, welches mit dem ersten Gewinde (11) in Eingriff bringbar ist.

6. Einheit nach einem der Ansprüche 1 bis 5, wobei der Kaffeebohnenbehälter (10) bis auf die Öffnung geschlossen ausgebildet ist.

7. Einheit nach einem der Ansprüche 1 bis 6, wobei der Kaffeebohnenbehälter (10) im Wesentlichen kreiszylinderförmig ausgebildet ist.

8. Einheit nach einem der Ansprüche 1 bis 7, wobei der Kaffeebohnenbehälter (10) einen gleichbleibenden Innendurchmesser aufweist.

9. Einheit nach einem der Ansprüche 1 bis 8, wobei der Kaffeebohnenbehälter (10) aus einem steifen oder halbsteifen Material gefertigt ist.

10. Einheit nach einem der Ansprüche 1 bis 8, wobei der Kaffeebohnenbehälter (10) ein flexibler oder weicher Beutel ist und wobei das Kopplungselement (11) einen Ring (115) mit einem Gewinde (113) aufweist zur Verbindung mit dem Portionierer (2).

11. Einheit nach einem der Ansprüche 1 bis 10, wobei der Portionierer (2) im Wesentlichen eine kreiszylinderförmige Aussenkontur aufweist.

12. Einheit nach einem der Ansprüche 1 bis 11, wobei der Portionierer (2) ein erstes Einstellmittel (21) aufweist, mittels welchem eine Dosierung der Kaffeebohnen manuell wählbar ist.

13. Einheit nach einem der Ansprüche 1 bis 12, wobei das Behältermodul (M) ferner eine Mahlgradeinstellung (3) zur wählbaren Einstellung eines Mahlgrads aufweist, wobei die Mahlgradeinstellung (3) bei Verbindung des Behältermoduls (M) mit dem Mahlwerk (4) auf das Mahlwerk (4) wirkt.

14. Einheit nach Anspruch 13, wobei der Portionierer (2) zwischen Kaffeebohnenbehälter (10) und Mahlgradeinstellung (3) angeordnet ist.

15. Einheit nach einem der Ansprüche 13 und 14, wobei die Mahlgradeinstellung (3) ein zweites Einstellmittel (31) aufweist, mittels welchem der Mahlgrad manuell wählbar ist.

16. Einheit nach einem der Ansprüche 1 bis 15, wobei das Behältermodul (M) eine im Wesentlichen zylinderförmige Aussenkontur aufweist.

17. Einheit nach Anspruch 5, wobei der Kaffeebohnenbehälter (10) kreiszylinderförmig und einstückig ausgebildet ist mit einem geschlossenen Boden und einer dem Boden gegenüberliegenden Öffnung, wobei das Kopplungselement ein Aussengewinde (11) ist und wobei die Öffnung vom Aussengewinde (11) umgeben ist und wobei das dritte Gewinde des Deckels (12) ein zum Aussengewinde (11) passendes Innengewinde ist.

18. Einheit nach einem der Ansprüche 1 oder 2, wobei der Kaffeebohnenbehälter (10) ein Beutel ist mit einem Rand (101), der eine Öffnung des Kaffeebohnenbehälters (10) umgibt, wobei das Kopplungselement (11) einen unteren Ring (115) zur Verbindung mit dem Portionierer (2) und einen oberen Ring (114) aufweist, und wobei der Rand (101) des Kaffeebohnenbehälters (10) im geöffneten Zustand des Kaffeebohnenbehälters (10) zwischen dem oberen und dem unteren Ring (114, 115) eingeklemmt gehalten ist.

## Claims

1. A unit having a container module (M), wherein the container module (M) comprises at least one coffee bean container (10) and a portioning device (2) for metering coffee beans, wherein the container module (M) as a whole is configured for connection to a coffee apparatus, wherein said connection makes possible a metered delivery of coffee beans from the container module (M) into a grinder (4) of the coffee apparatus and wherein the coffee bean container (10) is tightly closed prior to the first use and, after an opening operation, has an opening through which coffee beans enter into the portioning device (2), and wherein, during intended use of the container module (M) with a coffee apparatus, the coffee bean container (10) is arranged over the portioning device (2), **characterized in that** the coffee bean container (10) is coupled with the portioning device (2) in a releasable and reconnectable manner, **in that** a coupling element (11) is arranged around the opening, said element being used for connection to the portioning device (2), and **in that** the opening can be closed again when the coffee bean container (10) is separated from the portioning device (2).

2. The unit as claimed in claim 1, wherein the coupling element is a first thread (11, 113) and wherein the portioning device (2) has a matching second thread which can be brought into engagement with the first thread (11, 113).

3. The unit as claimed in either of claims 1 and 2, wherein the unit has a lid (12) for closing the container.

4. The unit as claimed in claim 3, wherein the coupling element (11) is used for connection to the lid (12).

5. The unit as claimed in claims 2 and 4, wherein the lid (12) has a third thread which can be brought into engagement with the first thread (11).

6. The unit as claimed in one of claims 1 to 5, wherein the coffee bean container (10) is of closed configuration, except for the opening.

7. The unit as claimed in one of claims 1 to 6, wherein the coffee bean container (10) is of substantially circular cylindrical configuration.

8. The unit as claimed in one of claims 1 to 7, wherein the coffee bean container (10) has a constant internal diameter.

9. The unit as claimed in one of claims 1 to 8, wherein the coffee bean container (10) is manufactured from a stiff or semi-stiff material.

10. The unit as claimed in one of claims 1 to 8, wherein the coffee bean container (10) is a flexible or soft bag and wherein the coupling element (11) has a ring (115) with a thread (113) for connection to the portioning device (2).

11. The unit as claimed in one of claims 1 to 10, wherein the portioning device (2) substantially has a circular cylindrical outer contour.

12. The unit as claimed in one of claims 1 to 11, wherein the portioning device (2) has a first setting means (21), by means of which a metering of the coffee beans can be manually selected.

13. The unit as claimed in one of claims 1 to 12, wherein the container module (M) furthermore has a grinding degree setting device (3) for the selectable setting of the grinding degree, wherein, when the container module (M) is connected to the grinder (4), the grinding degree setting device (3) affects the grinder (4).

14. The unit as claimed in claim 13, wherein the portioning device (2) is arranged between the coffee bean container (10) and the grinding degree setting device (3).

15. The unit as claimed in either of claims 13 and 14, wherein the grinding degree setting device (3) has a second setting means (31), by means of which the grinding degree can be manually selected.

16. The unit as claimed in one of claims 1 to 15, wherein the container module (M) has a substantially cylindrical outer contour.

17. The unit as claimed in claim 5 wherein the coffee bean container (10) is of circular cylindrical and one-piece configuration, having a closed base and the opening opposite the base, wherein the coupling element is an external thread (11) and wherein the opening is surrounded by the external thread (11), and wherein the third thread of the lid (12) has an internal thread matching the external thread (11).

18. The unit according to one of claims 1 or 2, wherein the coffee bean container (10) is a bag having an edge (101) which surrounds an opening of the coffee bean container (10), wherein the coupling element (11) has a lower ring (115) for connection to the portioning device (2) and an upper ring (115) and wherein the edge (101) of the coffee bean container (10), in the open state of the coffee bean container (10), is held in a clamped manner between the upper and the lower ring (114, 115).

## Revendications

1. Unité comprenant un module formant récipient (M), le module formant récipient (M) comprenant au moins un récipient à grains de café (10) et un dispositif de formation de portions (2) destiné à doser les grains de café, le module formant récipient (M) étant conçu dans son ensemble pour être relié à un appareil à café, cette liaison permettant de délivrer de manière dosée des grains de café depuis le module formant récipient (M) jusque dans un moulin (4) de l'appareil à café et le récipient à grains de café (10) étant fermé hermétiquement avant la première utilisation et comportant, après ouverture, une ouverture permettant aux grains de café de passer dans le dispositif de formation de portions (2), et le récipient à grains de café (10) étant disposé au-dessus du dispositif de formation de portions (2) lorsque le module formant récipient (M) est utilisé comme prévu avec un appareil à café, **caractérisée en ce que** le récipient à grains de café (10) est accouplé au dispositif de formation de portions (2) de manière amovible et de manière à pouvoir être relié à nouveau, **en ce que** l'élément d'accouplement (11) est disposé autour de l'ouverture, lequel sert à effectuer la liaison au dispositif de formation de portions (2) et **en ce que** l'ouverture peut être refermée lorsque le récipient à grains de café (10) est séparé du dispositif de formation de portions (2).

2. Unité selon la revendication 1, l'élément d'accouplement étant un premier filetage (11, 113) et le dispositif de formation de portions (2) comportant un deuxième filetage correspondant qui peut s'engrener avec le premier filetage (11, 113).

3. Unité selon l'une des revendications 1 ou 2, l'unité comportant un couvercle (12) destiné à fermer le récipient.

4. Unité selon la revendication 3, l'élément d'accouplement (11) servant à effectuer la liaison au couvercle (12).

5. Unité selon les revendications 2 et 4, le couvercle (12) comportant un troisième filetage qui peut s'engrener avec le premier filetage (11).

6. Unité selon l'une des revendications 1 à 5, le récipient à grains de café (10) étant conçu pour être fermé à l'exception de l'ouverture.

7. Unité selon l'une des revendications 1 à 6, le récipient à grains de café (10) ayant sensiblement la forme d'un cylindre à base circulaire.

8. Unité selon l'une des revendications 1 à 7, le récipient à grains de café (10) ayant un diamètre intérieur constant.

9. Unité selon l'une des revendications 1 à 8, le récipient à grains de café (10) étant en une matière rigide ou semi-rigide.

10. Unité selon l'une des revendications 1 à 8, le récipient à grains de café (10) étant un sac flexible ou souple et l'élément d'accouplement (11) comportant un anneau (115) pourvu d'un filetage (113) destiné à effectuer la liaison au dispositif de formation de portions (2).

11. Unité selon l'une des revendications 1 à 10, le dispositif de formation de portions (2) présentant sensiblement un contour extérieur en forme de cylindre à base circulaire.

12. Unité selon l'une des revendications 1 à 11, le dispositif de formation de portions (2) comportant un premier moyen de réglage (21) permettant de choisir manuellement un dosage des grains de café.

13. Unité selon l'une des revendications 1 à 12, le module formant récipient (M) présentant également un réglage de mouture (3) destiné à régler sélectivement une mouture, le réglage de mouture (3) agissant sur le moulin (4) lorsque le module formant récipient (M) est relié au moulin (4).

14. Unité selon la revendication 13, le dispositif de formation de portions (2) étant disposé entre le récipient à grains de café (10) et le réglage de mouture (3).

15. Unité selon l'une des revendications 13 et 14, le réglage de mouture (3) comportant un deuxième moyen de réglage (31) permettant de choisir manuellement la mouture.

16. Unité selon l'une des revendications 1 à 15, le module formant récipient (M) présentant un contour extérieur sensiblement cylindrique.

17. Unité selon la revendication 5, le récipient à grains de café (10) étant en forme de cylindre à base circulaire et étant conçu d'une seule pièce avec un fond fermé et une ouverture opposée au fond, l'élément d'accouplement étant un filetage extérieur (11) et l'ouverture étant entourée par le filetage extérieur (11) et le troisième filetage du couvercle (12) étant un filetage intérieur qui correspond au filetage extérieur (11).

18. Unité selon l'une des revendications 1 ou 2, le récipient à grains de café (10) étant un sac pourvu d'un bord (101) qui entoure une ouverture du récipient à grains de café (10), l'élément d'accouplement (11) comportant un anneau inférieur (115) destiné à effectuer la liaison au dispositif de formation de portions (2) et un anneau supérieur (114), et le bord (101) du récipient à grains de café (10) étant maintenu serré entre les anneaux supérieur et inférieur (114, 115) lorsque le récipient à grains de café (10) est ouvert.
